# EUROPEAN PATENT SPECIFICATION

(11) **EP 1 954 004 B1**
(45) Date of publication and mention of the grant of the patent: **18.01.2012**
(21) Application number: 07002056.5
(22) Date of filing: 31.01.2007
(51) Int. Cl.: H04L 29/08, G01D 9/02, H04L 12/28, H04L 12/56

(54) **Method for collaborative storage of event-related data in sensor networks and sensor network capable of providing a file system for storing event-related data**
Methode zur Gemeinschaftsspeicherung von ereignisbezogenen Daten in Sensornetzwerken und Sensornetzwerk, das in der Lage ist, ein Dateisystem zum Speichern von ereignisbezogenen Daten bereitzustellen
Procédé de stockage de collaboration de données liées à un évènement dans les réseaux de capteur, et réseau de capteur pouvant fournir un système de fichiers pour stocker les données relatives à un événement

(43) Date of publication of application: 06.08.2008
(73) Proprietor: Deutsche Telekom AG, 53113 Bonn (DE)
(72) Inventor: Krishnamurthy, Sudha Dr., 10627 Berlin (DE)
(74) Representative: Kampfenkel, Klaus

(56) References cited:
- WO-A-03/093941
- DE-A1-102005 030 031
- US-A1- 2004 103 139
- US-A1- 2006 026 164
- KUMAR A ET AL: "Challenges in utilizing Aggregate Logical Sensor Units for Wireless Sensory Information Networks" PERSONAL, INDOOR AND MOBILE RADIO COMMUNICATIONS, 2005. PIMRC 2005. IEEE 16TH INTERNATIONAL SYMPOSIUM ON BERLIN, GERMANY 11-14 SEPT. 2005, PISCATAWAY, NJ, USA,IEEE, 11 September 2005 (2005-09-11), pages 1342-1348, XP010926324 ISBN: 978-3-8007-29
- OMOTAYO A ET AL: "Efficient Data Harvesting for Tracing Phenomena in Sensor Networks" SCIENTIFIC AND STATISTICAL DATABASE MANAGEMENT, 2006. 18TH INTERNATIONAL CONFERENCE ON VIENNA, AUSTRIA 03-05 JULY 2006, PISCATAWAY, NJ, USA,IEEE, 3 July 2006 (2006-07-03), pages 59-70, XP010927071 ISBN: 0-7695-2590-3

## Description

### Field of the invention

The invention relates to sensor networks in general, and especially to a method and a sensor network for storing event-related data.

### Background of the invention

Wireless sensor networks can be utilized for a variety of applications. Initially motivated by military applications, also a number of civilian application fields of wireless sensor networks have evolved. Surveillance, environmental monitoring or structural health monitoring are only some application examples of wireless sensor networks.

Typically a wireless sensor network is a large-scale wireless network of small sensor nodes, adapted for wireless, ad hoc, multi-hop communication between the nodes. For surveillance or monitoring of a specific area, typically homogeneous sensor nodes are randomly deployed in the area of interest remaining immobile after deployment.

Smart sensor nodes, such as motes, are embedded nodes that are not only capable of sensing, but they also have limited processing and storage capabilities, along with the ability to communicate wirelessly over a limited range. Hence, these smart sensor nodes can be regarded as a highly energy-constrained distributed system, with the ability to sense and generate data about the environment in which they are placed.

In US 2004/0103139 A1 a distributed processing system is described, wherein a sensor network is connected to more powerful computing devices in order to provide infrastructure support for the sensors. One such support is the ability to store the data generated by the sensors.

A method for detecting event-related data by means of a sensor network is described in US 2006/0026164 A1, wherein the sensor network is connected to a central computing device and event-related data can be temporarily stored in storage devices included in one or more sensor nodes before it is transmitted to the central computing device.

However, sensor nodes are often deployed in remote environments, where access to remote powerful computing elements may be available only intermittently.

Other important prior art is disclosed in XP10927071, XP10926324 and DE 10 2005 030031.

It is therefore an object of the present invention to show a new and improved approach to store event-related data acquired by means of a sensor network, in particular a wireless sensor network.

### Summary of the Invention

The inventive solution of the object is achieved by each of the subject matter of the respective attached independent claims. Advantageous and/or preferred embodiments or refinements are the subject matter of the respective attached dependent claims.

The inventive method for storing event-related data of pre-defined events detected with a plurality of sensor nodes of a wireless sensor network accordingly comprises the steps of providing at least one event type by defining at least one condition, wherein an event of said event type is detected when sensor data generated by at least one of said sensor nodes satisfies said defined condition, defining a storage size for storing event-related data for detected events of the defined event type, and automatically organizing the sensor network to form at least one zone associated with the defined event type, wherein said zone comprises a group of sensor nodes, the total storage capacity of which has at least the defined storage size for storing the event-related data.

With great advantage at least one master node is automatically selected for each zone from the respective group of sensor nodes. Such master node preferably acts as primary storage manager and accordingly receives event-related data for each detected event of the defined event type, selects a sensor node of the group and transmits the received event-related data to the selected sensor node where it is then stored. In the following sensor nodes of the group also are referred to as zone members of the respective zones.

Further, with advantage a storage mode is defined for the event type for organizing the storage of event-related data within the corresponding zone. Examples of advantageous storage modes are temporal and spatial storage modes.

In a temporal storage mode event-related data of events of a certain event type is consecutively stored in different sensor nodes of the associated zone, wherein in each sensor node event-related data is stored of events detected during a pre-defined time interval or until the maximum storage capacity of the respective sensor node is reached. In a spatial storage mode event-related data of events of a certain event type detected at same locations in the sensor network is stored in same sensor nodes of the associated zone. By means of the described selectable storage mode a correlation of the storage organization of a zone and the associated event type is achieved.

Further storage modes for instance comprise an identity-based storage organization, in which different instances of an event type can be distinguished and information related to different instances is stored in different sensor nodes. Also hierarchical or redundant storage organization is possible. In a hierarchical storage mode sensor nodes at different hierarchical levels for instance store information at different levels of resolution, wherein every node has detailed information about the local events, but has only a compressed view of the events witnessed by the nodes that are below it in the hierarchy.

The described method advantageously allows to organize the resources of a network of smart sensor nodes as a file system for storing ephemeral data generated by the sensors. Applications can use this system by specifying the events that need to be tracked, the amount of storage r,eeded for each event, and the type of correlation needed for each event. Given this input, the described method partitions an ad-hoc network of sensor nodes into zones of the specified size. Within each zone, nodes use their collaborative resources to store related data. Thus, each zone can be considered as a folder for storing and correlating data pertaining to the same event type and the zones together form a distributed file system for the sensor network,

By grouping related information within the same proximity, the described method enables energy-efficient storage, information retrieval, and correlation of events detectable by the sensor nodes of the network, wherein preferably every zone has a master node that coordinates the resources of the zone members to store data about related events. Since sensor-generated data typically is ephemeral, by grouping together information with similar priorities, the described method furthermore advantageously enables efficient deletion of obsolete data.

Unlike approaches that depend on an external entity for storing sensor data, the described method is more energy efficient, because data does not have to be communicated long distances to a remote entity frequently. Instead data is stored within the sensor network for temporary periods of time. Whenever an external entity becomes available, the stored data from the sensor network can be communicated to it and storage reclaimed.

In addition to energy efficiency, an added advantage of the approach proposed by the described method is that it can be used in environments where an external storage entity is available only intermittently.

In order to correlate events and reduce the search space the described method advantageously takes an ad-hoc network of embedded sensor nodes, self-organizes them into collaborative zones, and allows related information to be stored within each zone. The storage organization within each zone can be chosen according to the type cf event and this is done in such a way so as to reduce the search space during information retrieval and the communication overhead involved in correlating events. Thus the described method is highly energy-efficient, which is important due to the energy-constrained sensor nodes.

By utilizing the described method a collaborative storage system is provided which preferably serves as a basis for a file system for sensor-generated data.

Accordingly the method preferably comprises the step of transmitting at least one pre-defined file system command from a separate computer system to at least one sensor node of the sensor network. Such a separate computer system can for instance be a stationary or mobile base station or backend system to which the sensor network has only intermittent access. A mobile base station adapted for wireless communication can for instance at selected times be moved within the transmission range of at least one sensor node of the sensor network.

For providing file system functionality, the forming of zones which are associated with defined event types preferably is initiated by transmitting a pre-defined file system command. Accordingly, the steps of defining at least one event type by defining at least one condition and of defining a storage size for storing event-related data for detected events of the defined event type with advantage are performed by transmitting at least one pre-defined file system command. Such file system command for instance is of a certain pre-defined type, similar to a command for creating a directory in known file systems, and comprises all necessary information on event types and associated storage sizes.

The step of organizing the sensor network to form at least one zone associated with the defined event type or event types preferably is automatically performed in response to transmitting such at least one pre-defined file system command.

For providing file system functionality preferably different types of file system commands are provided comprising for instance commands for performing read or write operations. Accordingly, with advantage stored event-related data is retrieved and/or deleted in response to transmitting at least one pre-defined file system command. A file system command preferably is transmitted to a master node which is adapted to process the command.

By grouping related information together within the same proximity, the file system enables energy-efficient read and write operations. Furthermore, by grouping related information with similar lifetimes together, the file system enables efficient deletion of data and reclamation of storage resources. This is important because the data generated by the sensor nodes is typically ephemeral or short-lived.

As described above, the sensor network is automatically organized to form at least one zone associated with at least one defined event type, said zone comprising a group of sensor nodes, wherein the total storage capacity of the sensor nodes of the group at least have the storage size defined for storing the event-related data of the at least one defined event type. In a preferred embodiment of the method at least two event types are defined for which different storage sizes are defined, wherein the largest storage size defined for any event type is defined as a minimum storage size in the process of automatically organizing the sensor network, so that each zone formed comprises a group of sensor nodes, wherein the total storage capacity of the sensor nodes of the group at least have said minimum storage size.

Preferably at least one master node is automatically selected for each zone from the respective group of sensor nodes. With special advantage the automatic zone forming is performed depending on at least one parameter of the wireless connection between the master node and at least one sensor node of the group.

Prerequisites for forming a zone advantageously comprise that signals which the master node transmits to and/or receives from each sensor node of the group are received with at least a pre-defined signal strength. Another preferred exemplary prerequisite is that each sensor node of the group is reachable by the master node using a pre-defined maximum transmission power. Still another exemplary prerequisite is that the distance between the master node and each sensor node of the group is below a pre-defined value.

Different algorithms can be utilized to organize the sensor network to form the at least one zone. A preferred way comprises that each sensor node of the wireless sensor network transmits a beacon signal with a pre-defined transmission power, wherein said beacon signal comprises an identification of the respective transmitting sensor node, detects its neighboring sensor nodes by receiving beacon signals from sensor nodes within transmission range, generates and transmits a neighbor list of detected neighboring sensor nodes, wherein said neighbor list comprises the identification of the detected neighboring sensor nodes in order of signal strength of the respective received beacon signals, receives the neighbor lists from its neighboring sensor nodes and determines its close neighbors by identifying those neighbor lists in which it is listed as first entry, determines the total storage capacity of its close neighbors, decides to become a master node, if the total storage capacity of its close neighbors has at least a pre-defined value and if at least one of its neighboring sensor nodes has not been listed in a list of close neighbors received from another master node, and that each sensor which decides to become a master node transmits a list of its close neighbors as an advertisement signal for advertising itself as master node and each sensor node which does not decide to become a master node transmits a zone joining signal to that master node from which it received the advertisement signal with the highest signal strength for becoming a member of a zone associated with that master node.

Since typically the sensor nodes are not all equally suited to become a master node, the steps of deciding whether to become a master node and consecutively transmitting a list of its close neighbors as an advertisement signal for advertising itself as master node are performed by the respective sensor node after a pre-defined waiting time, wherein said waiting time preferably depends on the residual energy and/or storage capacity of the respective sensor node and is independently defined for each sensor node. Preferably the waiting time is smaller the higher the residual energy and the higher the storage capacity of the respective sensor node, thereby increasing the probability to become a master node, since with a smaller waiting time the sensor node receives fewer advertisement signals from other master nodes before deciding whether to transmit one itself.

For saving energy the sensor nodes preferably are provided with a sleep mode in which the functionality of the sensor node is reduced and less energy is consumed. The sensor nodes of a group of sensor nodes preferably receive a sleep schedule from their associated master node depending of the storage mode of the respective zone. Accordingly, the master node, which typically does not make use of its sleep mode, consumes more energy than the remaining sensor nodes of the respective group of sensor nodes.

Therefore, the step of automatically organizing the sensor network to form at least one zone preferably is repeated at pre-defined intervals, wherein after repeating the step of automatically organizing the sensor network with advantage at least one different zone is formed and/or at least one different master node is selected. That way the function of master node is rotated between the sensor nodes of the sensor network and the energy load is accordingly balanced. Preferably this is done after the data stored ir the zones is uploaded to a base station that becomes accessible to the sensor network.

In a preferred embodiment, in which all sensor nodes of the sensor network essentially have the same storage capacity, a sensor node determines the total storage capacity of its close neighbors by counting their number.

As described above for zone forming a minimum storage size is defined for the at least one zone to be formed, wherein each zone is associated with a pre-defined event type. In order to prevent the automatic zone forming process to result in an insufficient number of zones for storing data related to events of distinct event types, with advantage also a maximum storage size is defined for the total storage capacity of the sensor nodes of the group of sensor nodes in the at least one zone.

Accordingly, in a preferred embodiment of the method essentially all sensor nodes of the sensor network are automatically organized into zones, each zone comprising a group of sensor nodes with a master node for each group, wherein the minimum total storage capacity of the sensor nodes of each group has a pre-defined minimum value and optionally also a pre-defined maximum value.

For routing event-related data to the master node of the zone associated with the respective defined event type advantageously a wireless communication backbone is established between the master nodes of the zones.

Detected events can be mapped to zones using any suitable hashing function, like for instance geographic hashing, and hence, queries can be routed to the appropriate storage zone using any routing method.

The event-related data of a detected event which is stored in a sensor node of the zone associated to the respective event type preferably comprises at least one of an identifier for identifying the event type, the time when the event was detected, the location where the event was detected, and/or an identifier for identifying a specific event instance. For this purpose the sensor nodes of the sensor network preferably are provided with a timer and means for detecting their own location.

Depending on the defined event type detected events can have different scope in time and space. Accordingly with advantage sensor data generated by at least two different sensor nodes at essentially the same time and/or in different zones may be matched to the same event of a defined event type.

An inventive sensor network for detecting and storing event-related data of pre-defined events according to the above described method comprises a plurality of sensor nodes, wherein each sensor node comprises at least one sensor for sensing and generating data about the environment, a transceiver for wireless communication with other sensor nodes, a control unit adapted to control the wireless communication with other sensor nodes to form at least one zone comprising a group of sensor nodes, wherein the total storage capacity of the sensor nodes of said group has at least a pre-defined minimum value, storage means for storing event-related data, and a power source of limited power, like for instance a battery.

With special advantage the control unit comprises at least a collaboration communication module providing instructions for the sensor node to form a group with other sensor nodes depending on pre-defined criteria, a partitioning module providing instructions for partitioning the sensor network into zones of pre-defined total storage capacity and for selecting a master node for each zone and a storage and event correlation module providing instructions for mapping event-related data to an associated master node and for sensor nodes which are selected as a master node instructions for storage organization within the respective zone.

For providing file system functionality prior to zone forming advantageously at least one event type and for that event type at least a minimum storage size and a storage mode is defined, depending on which the zone forming is performed. Accordingly, each sensor node preferably comprises storage means for storing a lookup table in which for at least one pre-defined event type an identification of the event type, at least one condition that needs to be satisfied for detecting an event of the pre-defined event type, and a pre-defined storage size for storing event-related data for events of the pre-defined event type are listed.

Most preferably the sensor network is adapted to automatically form for each entry of said lookup table at least one zone associated with the respective event type, said zone comprising a group of sensor nodes, wherein the total storage capacity of the sensor nodes of said group has at least the storage size defined in the loo<up table for the respective event type.

Since with special advantage the sensor network is adapted to provide a file system for storing event-related data of pre-defined events, the sensor network for this purpose preferably comprises at least one file system interface module for providing external access to the stored event-related data, wherein said file system interface module is adapted to process at least one pre-defined file system command.

In a preferred embodiment the file system interface module is arranged in the control unit of each sensor node, wherein the file system interface module for instance is provided as a software module. Preferably access to stored event-related data is provided by any master node of the sensor network, wherein for this purpose for instance a respective file system command is wirelessly transmitted to the respective master node. For data access the file system interface module advantageously is adapted to retrieve and/or delete stored event-related data.

Also the zone forming process itself can be triggered by transmitting a respective file system command to at least one sensor node of the sensor network. Accordingly, the control unit preferably is adapted to control wireless communication with other sensor nodes to form said at least one zone in response to processing at least one pre-defined file system command.

Most preferably the file system interface module comprises instructions for processing a pre-defined set of file system commands. Exemplary file system commands are described below.

### Brief Description of the Figures

It is shown in
- Fig. 1: a schematic view of an exemplary embodiment of a sensor node,
- Fig. 2: a schematic view of a preferred embodiment of a wireless sensor network partitioned into disjoint zones,
- Fig. 3: a flowchart of exemplary steps of a preferred embodiment a method for storing event-related data of pre-defined events detected with a wireless sensor network,
- Fig. 4: a table presenting a taxonomy of some exemplary events,
- Fig. 5: a table presenting exemplary storage organization modes, and
- Fig. 6: schematically examples of data structures used for different storage organizations.

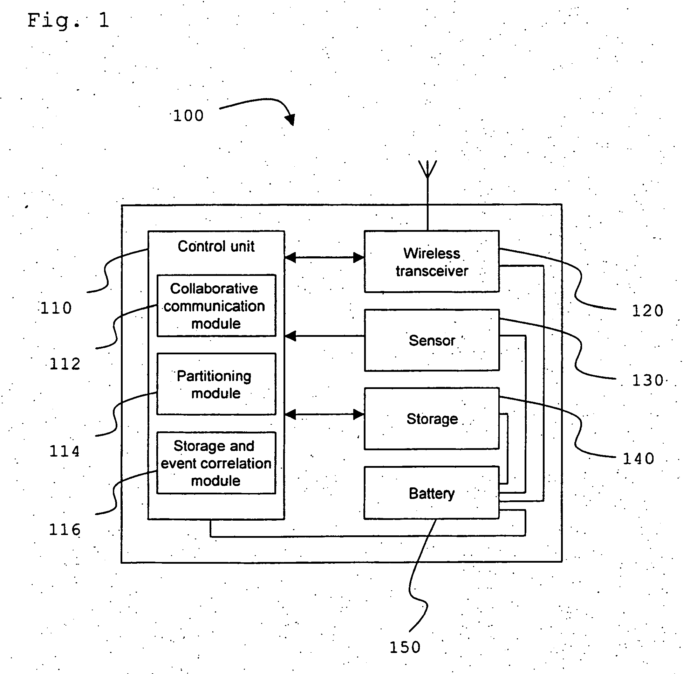

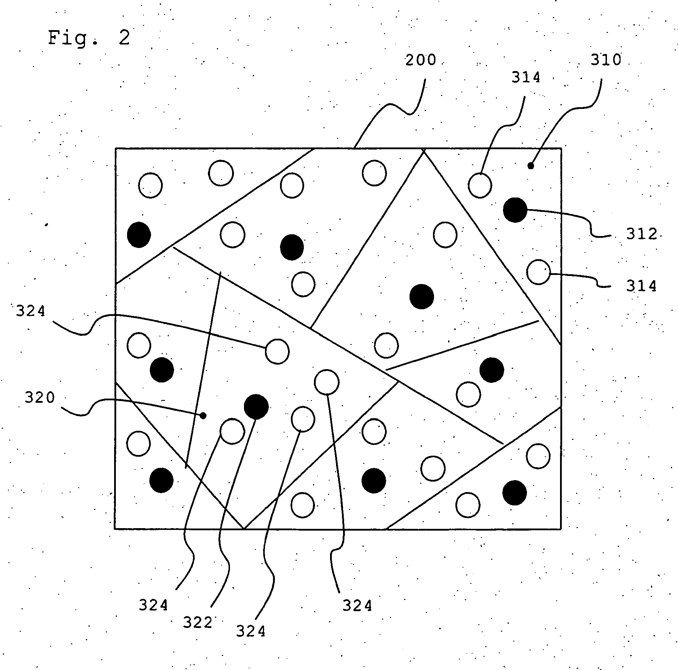

Fig. 1 shows a preferred embodiment of a sensor node 100 that can be utilized to form a wireless sensor network 200 as shown in Fig. 2. The sensor node 100, which can for instance be provided as a mote, in the shown embodiment comprises a transceiver 120 for wirelessly communicating with other similar sensor nodes, at least one sensor 130 for generating data relating to parameters of the environment, and storage means 140 for storing event-related data. The transceiver 120, the sensor 130 and the storage means 140 are controlled by a control unit 110. Furthermore, all above described components of the sensor node 100 are powered by means of a battery 150 which has only limited energy.

In the embodiment shown in Fig. 1 the control unit 110 comprises a collaborative communication module 112, a partitioning module 114 and a storage and event correlation module 116, which for instance are provided as software modules.

In the following the function of the modules 112, 114 and 116 are described in more detail.

The collaborative communication module 112 provides methods for sensor nodes to form groups based on different criteria. It also provides methods to select a coordinator for each group based on different criteria. An example of a typical interface command to invite members to join a group is groupJoin (criteria, minSize, maxSize). The parameter "criteria" comprises the criteria that decide the membership in a group. One or more criteria may te combined together. Exemplary criteria that are relevant for sensor nodes are signal strength, distance or transmission power.

The sensor nodes communicate using their radio and the signal strength is one measure of the connectivity between nodes. The signal strength criterion allows a node to join a group with those nodes with whom it can communicate with at least the specified signal strength. The distance criterion enables nodes that are within a certain neighborhood distance to form a group. This criterion is useful to reduce the energy spent in communication, because communication in sensor networks is typically localized.

The criterion of transmission power allows nodes to form a group with neighboring nodes that are reachable using a specified maximum transmission power.

The parameter "minSize" defines the minimum number of nodes needed to form a group and the parameter "maxSize" defines the maximum number of nodes allowed in a group, wherein "maxsize" may be an optional parameter.

In Fig. 2 a wireless sensor network 200 is shown with sensor nodes depicted as small circles. The area indicated with numeral 200 may however also be a selected area of a considerably larger wireless sensor network with more sensor nodes. The partitioning module 114 uses the group communication module 112 to partition the sensor network 200 into zones of appropriate size, exemplary indicated by reference numerals 310 and 320, wherein the zone size is the storage size given by the collective storage capacity of the sensor nodes which are zone members of the respective zone. The individual sensor nodes of the sensor network 200 may have different individual storage capacities which are accordingly taken into account when determining the zone size. The zone size can be determined more easily, however, if all sensor nodes of the sensor network 200 essentially have the same storage capacity. In the described embodiment each sensor node of the sensor network 200 at least has a pre-defined minimum storage capacity and accordingly in the following it is presumed that the zone size, or at least a minimum zone size, can be determined by counting the number of nodes in a zone. The partitioning module 114 also ensures that every zone has a master node that serves as a primary storage manager (PSM) for that zone. For the zones 310 and 320 the primary storage managers are exemplary indicated by reference numerals 312 and 322. The primary storage managers 312 and 322 of zones 310 and 320 respectively decide how to use the collaborative resources of the zone members 314 and 324 respectively to store information about related events in an energy-efficient manner.

Different partitioning algorithms have been proposed for sensor networks. One method that has been proposed previously is to divide the network into equal-sized grids. However, such a strategy is suitable only if the nodes are uniformly distributed. Another method that has been proposed is to create partitions of the maximum possible size. However, partitioning a sensor network for providing distributed storage imposes the following additional constraints and hence, previously proposed partitioning algorithms are not suitable.

In order to ensure sufficient information availability in each storage zone, every zone preferably has at least a minimum number of zone members. Further, a sufficient number of zones is preferably provided to store information about distinct events, i.e. events of different event types. This imposes an upper bound on the zone size.

The transmission power used for communication between a primary storage manager and the respective zone members has to be low, for instance within a certain energy budget E, in order to provide energy-efficient storage and correlation. On the other hand, although a limited transmission power is used, still a good connectivity between a primary storage manager and the respective zone members is preferably provided. Therefore, in the described embodiment the signal strength is used as a measure of connectivity.

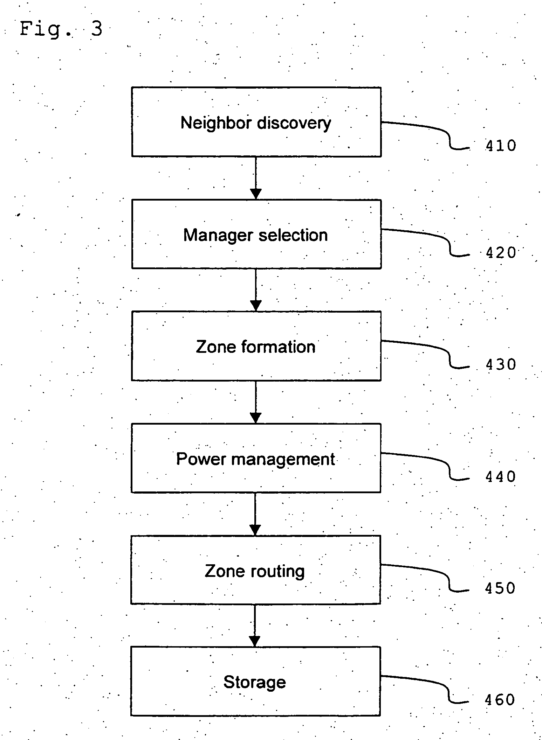

Exemplary steps involved in the partitioning process according to a preferred embodiment of the inventive method are shown in Fig. 3.

In step 410, sensor nodes discover their neighbors by locally propagating discovery beacons with a transmission power E. At the end of the discovery process, every sensor node records its neighbors in decreasing order of the received signal strength, in its local neighborhood table.

In step 420 the primary storage managers are selected. The selection of primary storage managers should meet the above stated partitioning criteria. In order to achieve this, every sensor node locally broadcasts the list of neighbors discovered in step 410, ordered according to the received signal strength. Based on the neighbor lists it receives, a sensor node N decides to become a primary storage manager, if the number of neighbors that have listed N as their first neighbor is larger or equal to the above defined minimum number of zone members and at least one of N's neighbors has not been listed as a potential zone member by any other primary storage manager. When a sensor node decides to become a primary storage manager, it advertises its decision by locally broadcasting a manager advertisement message in which it lists its potential zone members. All sensor nodes record the manager advertisement messages that they receive and order the advertisements in decreasing order of the signal strength.

In step 430, sensor nodes which are not a primary storage manager send a join message to the preferred primary storage manager, i.e. the one having the highest signal strength. At the end of step 430, the network is partitioned into disjoint zones and every zone has a primary storage manager and a minimum number of sensor nodes as zone members which are associated with the respective primary storage manager.

In step 440, each primary storage manager sends sleep schedules to its zone members to initiate power management among its zone members. This also serves as a confirmation of the zone membership.

In step 450 the primary storage managers communicate to form a routing backbone and this allows communication between two different zones, i.e. communication between the primary storage managers of the respective zones. This completes the partitioning phase and now the network is ready for storing and correlating events, indicated by step 460.

In order to balance the energy load, the primary storage managers preferably are rotated. This can be done for instance, whenever the data stored in the zones is uploaded to a base station that becomes accessible to the sensor network. The above described partitioning process is repeated and new primary storage managers are selected during each rotation.

Mapping event-related data to the associated primary storage manager and storage organization within the respective zone is controlled by the storage and event correlation module 116.

When the sensor nodes in a zone detect an event, they send the information they collect to the primary storage manager of their zone. The primary storage manager uses a hash function to map the event to the primary storage zone (PSZ) which is associated with the respective event type and routes the information it has collected to the PSZ for that event. Different hashing functions, such as geographic hashing, or ID-based hashing may be used. If the event is mobile, this process is repeated by each zone that detects the event, as the event propagates through the network. The primary storage manager (PSM) receives reports about the event from different zones and uses the resources of its zone members to store and correlate information pertaining to the event in real-time.

Many of the sensor-based information can be correlated and notifications generated using simple operators, such as max, min, average, and sum. Such simple operations are well within the capability of low-end sensor nodes, such as motes, which makes it possible to carry out event correlation within the sensor network.

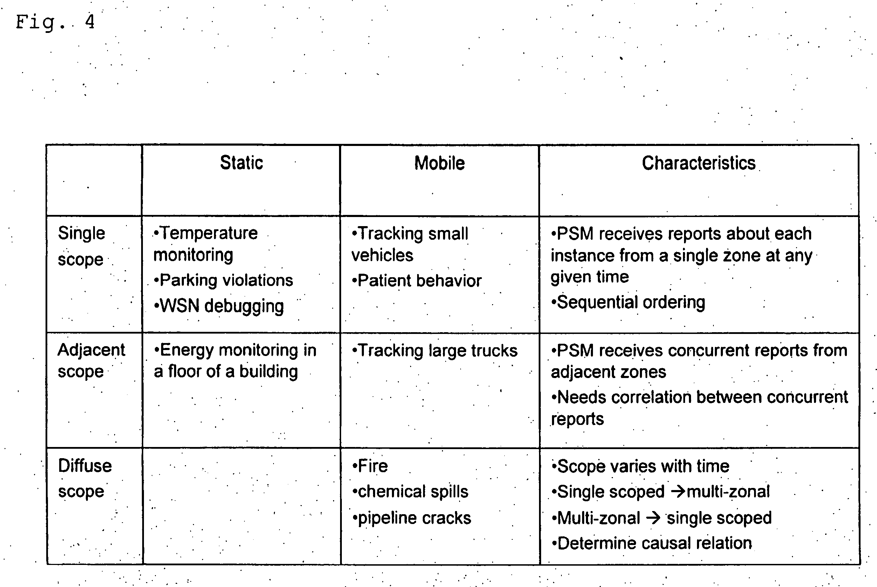

In the table shown in Fig. 4 a taxonomy of some of the events that can be correlated using the described system is presented. Each row in the table classifies events based on their scope during their lifetime with respect to a zone, while the columns classify events based on their mobility with respect to the zones. Static events are observed by the same zone or set of zones while mobile events are observed by different zones at different points in time. In the following this taxonomy is explained by giving

### examples.

Each instance of a single-scoped event occurs only in a single zone at any given time. As a result, a PSZ for a single-scoped event receives reports about each individual instance of the event from at most one zone at any given time.

A single-scoped event may be static, in which case the scope of the event is confined to the same zone for the lifetime of the event. An example of a static, single zonal event is a group of sensors monitoring the temperature in their vicinity. Another example is the sensor network debugging application, in which groups of sensors collect statistics locally for later introspection. In the case of static, single-scoped events, the PSM can sequentially order the information it receives from the zones based on time.

Single-scoped events may also be mobile, in which case it can be assumed that they typically follow continuous trajectories. So the event is tracked by adjacent zones over a continuous period of time. Tracking the movement of a normal-sized car or tracking human motion are examples of mobile, single-scoped events. As the event moves across the zones, only one of the zones detects and reports the event to the PSZ at any given instant of time. In this case, the PSM can sequentially order the information it receives from the zones based on space and time, because the reports from adjacent zones have different timestamps.

Events with adjacent scope always span multiple adjacent zones at the same time. As a result, the PSZ for an adjacent-scoped event receives concurrent reports about each individual instance of the event from different, but adjacent zones. In the case of adjacent, multi-zonal events, the PSM has to correlate the reports from adjacent zones to infer that they relate to the same instance of the event and not to distinct, single-scoped events. This can be enabled by ordering the reports from the zones based on space, time, or a fine-grained identity of the object, if that is available.

Adjacent, multi-zonal events may be static, in which case the same set of adjacent zones report the event throughout the duration of the event. Monitoring the energy consumption in a building floor with multiple rooms, wherein every room provides the zonal perspective is an example of a static, adjacent-scoped event.

Diffuse events differ from single and adjacent-scoped events in that their scope varies with time. An instance of a diffuse event may initially be reported by a single zone, thereby making it a single-scoped event. Alternatively, different instances of the event may be reported by different single zones. However, the event may propagate in time to other adjacent zones and extend its scope from being a single-scoped event to becoming an adjacent, multi-zonal event. Similarly, an event that begins as an adjacent-scoped multi-zonal event may fragment over time to multiple, single-scoped events. Chemical spills, fire, cracks along a pipeline, and seismic activity along the fault lines in an earthquake prone area are examples of diffuse events. In this case, the PSM receives reports from different zones that may or may not be adjacent as the event progresses. Moreover, these reports may be concurrent or distributed in time. Due to the time-varying pattern of information, the PSM stores and correlates the information to determine if the reports are causally related.

In the following exemplary variations for information organization in a zone are described.

When a primary storage zone for an event receives the observations from the zones across the network cr from its own zone members in the case of static, single zonal events, the primary storage manager has to decide how to use the cooperative resources within its zone to store the information, so as to enable real-time correlation.

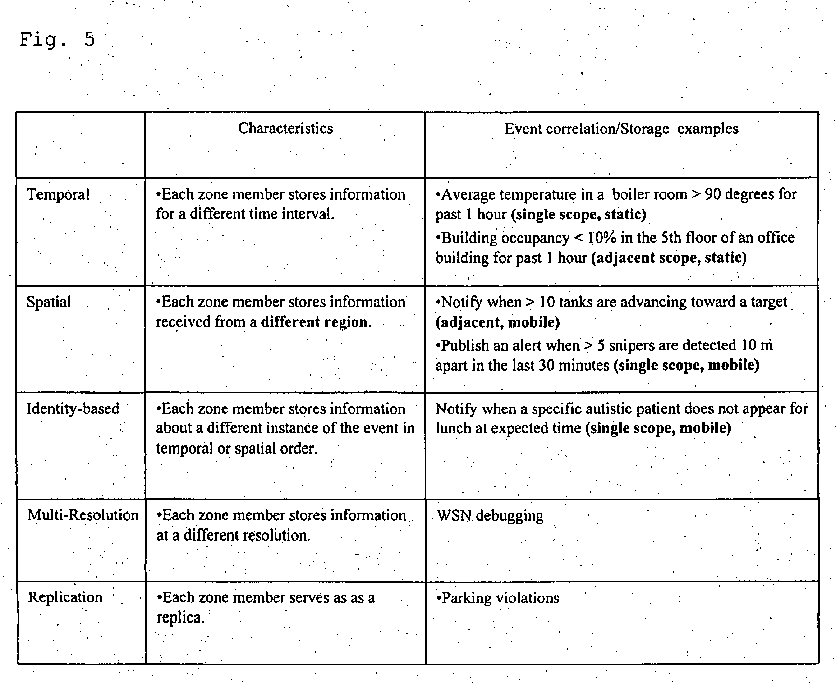

In the following some ways are presented in which information can be organized within a zone for the event taxonomy presented in Figure 4. Each primary storage manager in the network chooses the organization depending on the event that is mapped to its zone. The different organizations are summarized in the table shown in Fig. 5.
a) Temporal Organization: A PSM can use the resources of its zone members to store information related to an event in temporal order of the occurrence of the event. This scheme assumes that the clock skew in the sensor observations is bounded within an acceptable threshold. In this scheme, every zone member stores information related to an event over a specific time interval. A zone member needs to be awakened only when its corresponding time interval is active. For instance, in the temperature monitoring application, the PSM uses a different zone member to store the temperature observations reported by the sensors during each 24-hour period. Similarly, images of driving violations captured at different intervals by camera sensors at a traffic intersection are temporally partitioned across the nodes in a zone.
   In each case, temporal ordering allows new observations to be easily correlated, as and when they arrive, with past events that have been stored. This can then be used to publish notifications about time-based events, as illustrated by the following examples:
   - the average temperature in the boiler room for the past 1 hour has been greater than 90 degrees, wherein this is a single scope, static event,
   - the building occupancy reported by different offices on the 5th floor of an office building has been less than 10 % for the past 1 hour, wherein this is an adjacent scope, static event.
b) Spatial Organization: Information in a PSZ can be ordered spatially, based on the zone that reported the event. For example, when a PSM receives reports about the presence of a vehicle either from a single zone or concurrently from multiple zones, the resources of different zone members are used to store the reports received from different zones. The information within the same zone member is ordered temporally. The PSM needs to awaken a zone member only when the incoming report is from a spatial region associated with that zone member. This organization may be used to correlate events within the same zone temporally or to causally relate events across adjacent zones and publish events of interest, as illustrated by the following examples:
   - in a surveillance scenario, notify an abnormal activity when more than 10 enemy tanks are detected to be advancing towards a target, wherein this is an adjacent scope, mobile event,
   - publish an alert when at least 5 different snipers have been detected in a region in the last hour and they are at most 10 meters apart from each other, wherein this is a single scope, mobile event.
c) Identity-based Organization: Whenever it is possible to distinguish between different instances of the same event, for example using RFID or other means, the primary storage managers store information related to different instances in different zone members. Information stored in the same zone member may be ordered spatially or temporally. When new reports arrive, only the zone member that is associated with that particular instance of the event needs to be awakened. For example, in the application for monitoring the behavior of autistic patients in a facility, the primary storage manager stores the sensor observations related to each patient in a different zone member. Within the same zone member, the information is temporally ordered. When new observations about a patient arrive, the primary storage manager awakens the appropriate zone member and correlates the new readings with the stored data. This correlation can be used to generate a notification, if there is a deviation in the behavioral pattern or if there is an absence of an event for a patient at the expected interval of time.
d) Multi-resolution organization: The primary storage managers can use the hierarchical organization of their zone members to store information at different resolutions. For example, in the WSN debugging application, some parameters are measured more frequently than others. The more frequently reported observations may be stored in zone members that are lower ranked and hence, wake up more frequently, while higher-ranked nodes that wake up less often may be used to store the parameters that are measured less frequently.
e) Replication: When information needs to be stored reliably, the PSM can replicate information across the nodes in its zone. Replication can be combined with any of the above schemes to provide reliability. For example, replication is useful in the case of the parking violation application, where loss of information results in loss of revenue. It is also useful in some surveillance applications, where it is hard to reconstruct the events when some critical piece of information is lost. The PSM can either fully replicate the information across all of its zone members or choose the degree of replication depending on the required reliability.

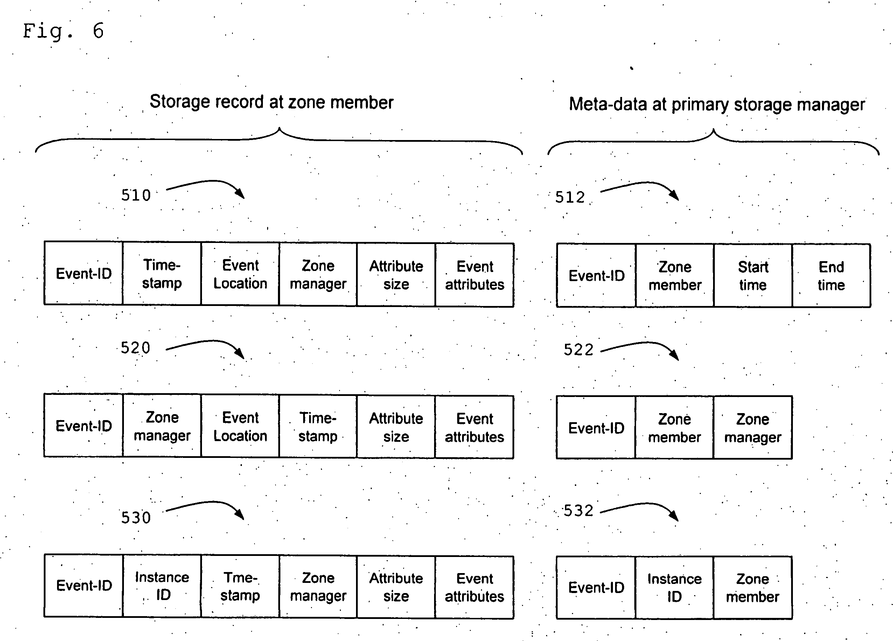

In Fig. 6 exemplary storage records for storing event-related data in a zone member and exemplary data structures for storing meta-data in the respective primary storage manager are shown for different storage organizations. The storage record 510 for storing of event-related data in a zone member and the data structure 512 for storing meta-data in the respective primary storage manager for instance are used for temporal storage organization, whereas storage record 520 and data structure 522 are used for spatial storage organization and storage record 530 and data structure 532 for ID-based storage organization.

The above described collaborative storage method can advantageously be used to build a file system for ephemeral data generated by sensor nodes, as a basis for distributed event-correlation of sensor events and as a query/response and publish-subscribe system for sensor-related events.

In the following exemplary file system operations are described that can be supported using the collaborative, storage organization described above. These operations are handled by the primary storage managers.

mkdir (event, size, storage mode):
This results in partitioning the network to create a new zone to store information about the specified event. The size parameter specifies the minimum number of nodes needed in the zone to store the information. The storage mode specifies the storage organization for the event, such as, temporal, spatial, or any of the organizations listed in Figure 5.

readdir (event):
This operation returns a summary of contents stored in the zone corresponding to the specified event. When the primary storage manager receives this command, it returns the actual size of the stored contents and a summary of the contents in an appropriate format depending on the storage organization used.

read (event):
This operation allows the contents stored in the zone corresponding to the specified event to be read. When the primary storage manager receives this command, it awakens all of its zone members and responds with the stored data in an appropriate order.

read (event, criteria):
This operation allows a specific subset of the data corresponding to the event to be read. The primary storage manager awakens the zone members that store the data subset matching the specified criteria and returns the stored data. The criteria may be as follows:
   - [start time, end time]: if the data is stored in temporal order, this criterion allows the data stored between the specified interval to be read.
   - [id]: if the data is stored based on the ID, this criterion allows the data corresponding to the specified ID to be returned.
   - [location]: if the data is stored in spatial order, this criterion allows the data corresponding to the specified location to be read. A range of locations may also be specified as an alternative criterion.

rmdir (event): This operation allows the zone corresponding to the specified event to be deleted. The primary storage manager awakens its zone members and deletes the data stored in its zone members. The primary storage manager and the zone members can now join other neighboring zones or store data pertaining to another event.
remove (event, criteria): The primary storage manager corresponding to the specified event awakens the zone member storing the portion of data matching the specified criteria, requests it to remove the data and reclaim the storage resources. The criteria may be specified as listed above.
copy (event, zm): The primary storage manager corresponding to the specified event sends the data stored in its zone to the primary storage manager zm, as identified by its ID or location.
move (event, zm_new): The primary storage manager (zm_old) corresponding to the specified event sends the data stored in its zone to the primary storage manager zm_new, as identified by its ID or location. In addition, zm_old removes the stored contents from its zone members and reclaims storage resources of the zone.

The inventors have implemented and evaluated a prototype of the system described above using a testbed of Zigbee motes.

## Claims

1. A method for storing event-related data of pre-defined events detected with a wireless sensor network (200) comprising a plurality of sensor nodes (100, 312, 314, 322, 324), with the steps of
a) providing at least one event type by defining at least, one condition, wherein an event of said event type is detected when sensor data generated by at least one of said sensor nodes (100, 312, 314, 322, 324) satisfies said defined condition,
b) defining a storage size for storing event-related data for detected events of the defined event type,
c) automatically organizing the sensor network (200) to form at.least one zone (310, 320) associated with the defined event type, said zone (310, 320) comprising a group of sensor nodes (312, 314, 322, 324), wherein the total storage capacity of the sensor nodes of said group has at least the defined storage size for storing the event-related data.

2. The method according to claim 1, wherein at least one master node (312, 322) is automatically selected from the group of sensor nodes.

3. The method according to claim 2, wherein for each detected event of the defined event type said the master node (312, 322) receives event-related data, selects a sensor node (314, 324) of the group and transmits the received event-related data to the selected sensor node (314, 324) where it is stored.

4. The method according to claim 2 or 3, wherein the zone (310, 320) is formed depending on at least one parameter of the wireless connection between the master node and at least one sensor node of the group.

5. The method according to claim 4, wherein the zone (310, 320) is formed depending on the prerequisite that the master node (312, 322) is capable of communicating with each sensor node (314, 324) of the group with at least a pre-defined signal strength.

6. The method according to claim 4, wherein the zone (310, 320) is formed depending on the prerequisite that each sensor node (314, 324) of the group is reachable by the master node (312, 322) using a pre-defined maximum transmission power.

7. The method according to any one of claims 2 to 6, wherein the zone (310, 320) is formed depending on the prerequisite that the distance between the master node (312, 322) and each sensor node (314, 324) of the group is below a pre-defined value.

8. The method according to any one of the preceding claims, further comprising the step of transmitting at least one pre-defined file system command from a separate computer system to at least one sensor node of the sensor network.

9. The method according to claim 8, wherein the steps a) and b) are performed by transmitting said at least one pre-defined file system command.

10. The method according to claim 8 or 9, wherein step c) is automatically performed in response to transmitting said at least one pre-defined file system command.

11. The method according to any one of claims 8 to 10, wherein stored event-related data is retrieved and/or deleted in response.to transmitting said at least one predefined file system command.

12. The method according to any one of the preceding claims, wherein automatically organizing the sensor network (200) to form at least one zone (310, 320) comprises that each sensor node (312, 314, 322, 324) of the wireless sensor network (200) transmits a beacon signal with a pre-defined transmission power, wherein said beacon signal comprises an identification of the respective transmitting sensor node,
- detects its neighboring sensor nodes by receiving beacon signals from sensor nodes within transmission range,
- generates and transmits a neighbor list of detected neighboring sensor nodes, wherein said neighbor list comprises the identification of the detected neighboring sensor nodes in order of signal strength of the respective received beacon signals,
- receives the neighbor lists from its neighboring sensor nodes and determines its close neighbors by identifying those neighbor lists in which it is listed as first entry,
- determines the total storage capacity of its close neighbors,
- decides to become a master node, if the total storage capacity of its close neighbors has at least a pre-defined value and if at least one of its neighboring sensor nodes has not been listed in a list of close neighbors received from another master node, and that
- each sensor which decides to become a master node transmits a list of its close neighbors as an advertisement signal for advertising itself as master node, and
- each sensor node which does not decide to become a master node transmits a zone joining signal to that master node from which it received the advertisement signal with the highest signal strength for becoming a member of a zone associated with that master node.

13. The method according to claim 12, wherein the step of transmitting a list of its close neighbors as an advertisement signal for advertising itself as master node is performed by the respective sensor node after a predefined waiting time.

14. The method according to claim 13, wherein the.waiting time is independently defined for each ,sensor node depending on its residual energy and/or storage capacity.

15. The method according to any one of claims 12 to 14, wherein the step of automatically organizing the sensor network (200) to form at least one zone (310, 320) is repeated at pre-defined intervals.

16. The method according to claim 15, wherein after repeating the step of automatically organizing the sensor network (200) at least one different zone (310, 320) is formed and/or at least one different master node (312, 322) is selected.

17. The method according to any one of claims 12 to 16, wherein all sensor nodes of.the sensor network essentially have the same storage capacity and the total storage capacity of said close neighbors is determined by counting their number.

18. The method according to any one of the preceding claims, wherein the total storage capacity of the sensor nodes (314, 324) of the group is below a pre-defined maximum storage size.

19. The method according to any one of the preceding claims, wherein a storage mode is defined for the event type for organizing the storage of event-related data within the corresponding zone (310, 320).

20. The method according to claim 19, wherein a temporal storage mode is defined, in which event-related data is consecutively stored in different sensor nodes (314, 324) of the associated zone (310, 320), wherein in each sensor node event-related data is stored of events detected during a pre-defined time interval or until the maximum storage capacity of the respective sensor node (314, 324) is reached.

21. The method according to claim 20, wherein a spatial storage mode is defined, in which event-related data of events detected at same locations in the sensor network (200) is stored in same sensor nodes (314, 324) of the associated zone (310, 320).

22. The method according to any one of the preceding claims, wherein essentially all sensor nodes of the sensor network (200) are automatically organized into zones, each zone comprising a group of sensor nodes with a master node for each group, wherein the minimum total storage capacity of the sensor nodes of each group has a pre-defined minimum value.

23. The method according to claim 22, wherein a wireless communication backbone is established between the master nodes (312, 322) of the zones for routing event-related data to the master node of the zone associated with the defined event type.

24. The method according to any one of the preceding claims, wherein event-related data (510, 520, 530) comprises at least one of
- an identifier for identifying the event type,
- the time when the event was detected,
- the location where the event was detected, or
- an identifier for identifying a specific event instance.

25. The method according to any one of the preceding claims, wherein sensor data generated by at least two different sensor nodes at essentially the same time and/or in different zones are matched to the same event of a defined event type.

26. A sensor network (200) for detecting and storing event-related data of pre-defined events, comprising a plurality of sensor nodes (100, 312, 314, 322, 324), adapted to perform a method according to any one of the preceding claims, wherein each sensor node (100) comprises
- at least one sensor (130) for sensing and generating data about the environment,
- a transceiver (120) for wireless communication with other sensor nodes,
- a control unit (110) adapted to control wireless communication with other sensor nodes to form at least one zone comprising a group of sensor nodes (312, 314, 324), wherein the total storage capacity of the sensor nodes of said group has at least a pre-defined minimum value,
- storage means (140) for storing event-related data, and
- a power source (150) of limited power.

27. The sensor network according to claim 26, wherein said control unit comprises at least
- a collaboration communication module (112) providing instructions for the sensor node (100) to form a group with other sensor nodes depending on pre-defined criteria,
- a partitioning module (114) providing instructions for partitioning the sensor network (200) into zones of predefined total storage capacity and for selecting a master node (312, 322) for each zone (310, 320) and
- a storage and event correlation module (116) providing instructions for mapping event-related data to an associated master node (312, 322) and for sensor nodes which are selected as a master node instructions for storage organization within the respective zone (310, 320).

28. The sensor network according to claim 26 or 27, wherein each sensor node comprises storage means for storing a lookup table in which for at least one predefined event type
- an identification of the event type,
- at least one condition that needs to be satisfied for detecting an event of the pre-defined event type, and
- a pre-defined storage size for storing event-related data for events of the pre-defined event type are listed.

29. The sensor network according to claim 28, wherein the sensor network is adapted to automatically form for each entry of said lookup table at least one zone associated with the respective event type, said zone comprising a group of sensor nodes, wherein the total storage capacity of the sensor.nodes of said group has at least the storage size defined in the lookup table for the respective event type.

30. The sensor network according to any one of the preceding claims, adapted to provide a file system for storing event-related data of pre-defined events, comprising at least one file system interface module for providing external access to the stored event-related data, wherein said file system interface module is adapted to process at least one pre-defined file system command.

31. The sensor network according to claim 30, wherein said file system interface module comprises instructions for processing a pre-defined set of file system commands.

32. The sensor network according to claim 30 or 31, wherein the control unit (110) comprises said file system interface module.

33. The sensor network according to claim 32, wherein the control unit (110) is adapted to control wireless communication with other sensor nodes to form said at least one zone in response to processing at least one pre-defined file system command.

34. The sensor network according to any one of claims 30 to 33, wherein said file system interface module is adapted to retrieve and/or delete stored event-related data.

## Patentansprüche

1. Verfahren zum Speichern von ereignisbezogenen Daten von vordefinierten Ereignissen, welche mit einem drahtlosen Sensornetz (200), welches eine Vielzahl von Sensorknoten (100, 312, 314, 322, 324) aufweist, erfasst werden, mit den Schritten a) Bereitstellen von mindestens einem Ereignistyp durch Definition von mindestens einer Bedingung, wobei ein Ereignis des Ereignistyps erfasst wird, wenn durch mindestens einen der genannten Sensorknoten (100, 312, 314, 322, 324) erzeugte Sensordaten die definierte Bedingung erfüllen,
b) Definition einer Speichergröße zum Speichern ereignisbezogener Daten für erfasste Ereignisse des definierten Ereignistyps,
c) automatisches Organisieren des Sensornetzes (200) zur Bildung von mindestens einer, dem definierten Ereignistyp zugeordneten Zone (310, 320), enthaltend eine Gruppe von Sensorknoten (312, 314, 322, 324), wobei die gesamte Speicherkapazität der Sensorknoten der Gruppe mindestens die zum Speichern der ereignisbezogenen Daten definierte Speichergröße hat.

2. Verfahren nach Anspruch 1, wobei mindestens ein Masterknoten (312, 322) automatisch aus der Gruppe der Sensorknoten ausgewählt wird.

3. Verfahren nach Anspruch 2, wobei der Masterknoten (312, 322) für jedes erfasste Ereignis des definierten Ereignistyps ereignisbezogene Daten empfängt, einen Sensorknoten (314, 324) der Gruppe auswählt und die empfangenen ereignisbezogenen Daten an den ausgewählten Sensorknoten (314, 324) überträgt, wo sie gespeichert werden.

4. Verfahren nach Anspruch 2 oder 3, wobei die Zone (310, 320) in Abhängigkeit von mindestens einem Parameter der drahtlosen Verbindung zwischen dem Masterknoten und mindestens einem Sensorknoten der Gruppe gebildet wird.

5. Verfahren nach Anspruch 4, wobei die Zone (310, 320) in Abhängigkeit von der Voraussetzung gebildet wird, dass der Masterknoten (312, 322) zur Kommunikation mit jedem Sensorknoten (314, 324) der Gruppe mindestens mit einer vordefinierten Signalstärke fähig ist.

6. Verfahren nach Anspruch 4, wobei die Zone (310, 320) in Abhängigkeit von der Voraussetzung gebildet wird, dass jeder Sensorknoten (314, 324) der Gruppe vom Masterknoten (312, 322) unter Verwendung einer vordefinierten maximalen Übertragungsleistung erreichbar ist.

7. Verfahren nach einem der Ansprüche 2 bis 6, wobei die Zone (310, 320) in Abhängigkeit von der Voraussetzung gebildet wird, dass der Abstand zwischen dem Masterknoten (312, 322) und jedem Sensorknoten (314, 324) der Gruppe unter einem vordefinierten Wert liegt.

8. Verfahren nach einem der vorstehenden Ansprüche, das zusätzlich den Schritt des Übertragens von mindestens einem vordefinierten Dateisystembefehl von einem separaten Computersystem an mindestens einen Sensorknoten des Sensornetzes umfasst.

9. Verfahren nach Anspruch 8, wobei die Schritte a) und b) durch Übertragen von mindestens einem vordefinierten Dateisystembefehl durchgeführt werden.

10. Verfahren nach Anspruch 8 oder 9, wobei Schritt c) automatisch unter Ansprechen auf das Übertragen von mindestens einem vordefinierten Dateisystembefehl durchgeführt wird.

11. Verfahren nach einem der Ansprüche 8 bis 10, wobei gespeicherte ereignisbezogene Daten unter Ansprechen auf das Übertragen des mindestens einen vordefinierten Dateisystembefehls abgerufen und/oder gelöscht werden.

12. Verfahren nach einem der vorstehenden Ansprüche, wobei das automatische Organisieren des Sensornetzes (200) zur Bildung von mindestens einer Zone (310, 320) beinhaltet, dass jeder Sensorknoten (312, 314, 322, 324) des drahtlosen Sensornetzes (200)
- ein Bakensignal mit einer vordefinierten Übertragungsleistung überträgt, wobei das Bakensignal eine Identifizierung des betreffenden sendenden Sensorknotens beinhaltet,
- seine benachbarten Sensorknoten durch Empfangen von Bakensignalen von Sensorknoten innerhalb des Übertragungsbereichs erfasst,
- eine Nachbarliste der erfassten benachbarten Sensorknoten erzeugt und überträgt, wobei die Nachbarliste die Identifizierung der erfassten benachbarten Sensorknoten in der Reihenfolge der Signalstärke der jeweiligen empfangenen Bakensignale beinhaltet,
- die Nachbarlisten von seinen benachbarten Sensorknoten empfängt und seine nächsten Nachbarn durch Identifizieren der Nachbarlisten bestimmt, in denen er als erster Eintrag aufgeführt ist,
- die Gesamtspeicherkapazität seiner nächsten Nachbarn feststellt,
- entscheidet, ein Masterknoten zu werden, wenn die Gesamtspeicherkapazität seiner nächsten Nachbarn mindestens einen vordefinierten Wert hat und wenn mindestens einer seiner nächsten Nachbarn nicht in einer von einem anderen Masterknoten empfangenen Liste der nächsten Nachbarn aufgeführt ist, und dass
- jeder Sensor, der entscheidet, ein Masterknoten zu werden, eine Liste seiner nächsten Nachbarn als Bekanntmachungssignal überträgt, um sich als Masterknoten bekannt zu machen, und
- jeder Sensorknoten, der nicht entscheidet, ein Masterknoten zu werden, ein Zonenbeitrittssignal an den Masterknoten überträgt, von dem er das Bekanntmachungssignal mit der höchsten Signalstärke empfangen hat, um ein Mitglied einer dem Masterknoten zugeordneten Zone zu werden.

13. Verfahren nach Anspruch 12, wobei der Schritt der Übertragung einer Liste seiner nächsten Nachbarn als Bekanntmachungssignal, um sich als Masterknoten bekannt zu machen, vom betreffenden Sensorknoten nach einer vordefinierten Wartezeit durchgeführt wird.

14. Verfahren nach Anspruch 13, wobei die Wartezeit für jeden Sensorknoten in Abhängigkeit von seiner restlichen Energie und/oder Speicherkapazität unabhängig definiert wird.

15. Verfahren nach einem der Ansprüche 12 bis 14, wobei der Arbeitsschritt des automatischen Organisierens des Sensornetzes (200) zur Bildung von mindestens einer Zone (310, 320) in vordefinierten Intervallen wiederholt wird.

16. Verfahren nach Anspruch 15, wobei nach dem Wiederholen des Schritts des automatischen Organisierens des Sensornetzes (200) mindestens eine andere Zone (310, 320) gebildet wird und/oder mindestens ein anderer Masterknoten (312, 322) ausgewählt wird.

17. Verfahren nach einem der Ansprüche 12 bis 16, wobei alle Sensorknoten des Sensornetzes im Wesentlichen dieselbe Speicherkapazität haben und die Gesamtspeicherkapazität der nächsten Nachbarn durch Zählen ihrer Anzahl bestimmt wird.

18. Verfahren nach einem der vorstehenden Ansprüche, wobei die Gesamtspeicherkapazität der Sensorknoten (314, 324) der Gruppe unter einer vordefinierten maximalen Speichergröße liegt.

19. Verfahren nach einem der vorstehenden Ansprüche, wobei ein Speichermodus für den Ereignistyp zur Organisation der Speicherung ereignisbezogener Daten innerhalb der entsprechenden Zone (310, 320) definiert ist.

20. Verfahren nach Anspruch 19, wobei ein temporärer Speichermodus definiert ist, in dem ereignisbezogene Daten fortlaufend in verschiedenen Speicherknoten (314, 324) der zugeordneten Zone (310, 320) gespeichert werden, wobei in jedem Sensorknoten ereignisbezogene Daten von während eines vordefinierten Zeitintervalls erfassten Ereignissen oder bis zum Erreichen der maximalen Speicherkapazität des betreffenden Sensorknotens (314, 324) gespeichert werden.

21. Verfahren nach Anspruch 20, wobei ein räumlicher Speichermodus definiert ist, in dem ereignisbezogene Daten von an denselben Stellen im Sensornetz (200) erfassten Ereignissen in selbigen Sensorknoten (314, 324) der zugeordneten Zone (310, 320) gespeichert werden.

22. Verfahren nach einem der vorstehenden Ansprüche, wobei im Wesentlichen alle Sensorknoten des Sensornetzes (200) automatisch in Zonen organisiert werden und jede Zone eine Gruppe von Sensorknoten mit einem Masterknoten für jede Gruppe aufweist, wobei die Mindestgesamtspeicherkapazität der Sensorknoten jeder Gruppe einen vordefinierten Mindestwert hat.

23. Verfahren nach Anspruch 22, wobei ein drahtloser Kommunikationsbackbone zwischen den Masterknoten (312, 322) der Zonen eingerichtet wird, um ereignisbezogene Daten an den Masterknoten der dem definierten Ereignistyp zugeordneten Zone zu leiten.

24. Verfahren nach einem der vorstehenden Ansprüche, wobei ereignisbezogene Daten (510, 520, 530) mindestens eines der folgenden Elemente enthalten:
- einen Kennzeichner zur Identifizierung des Ereignistyps,
- die Zeit, zu der das Ereignis erfasst wurde,
- den Ort, an den das Ereignis erfasst wurde, oder
- einen Kennzeichner zur Identifizierung einer bestimmten Ereignisinstanz.

25. Verfahren nach einem der vorstehenden Ansprüche, wobei von mindestes zwei verschiedenen Sensorknoten zur im Wesentlichen gleichen Zeit und/oder in verschiedenen Zonen erzeugte Sensordaten mit demselben Ereignis eines definierten Ereignistyps abgeglichen werden.

26. Sensornetz (200) zum Erfassen und Speichern ereignisbezogener Daten von vordefinierten Ereignissen, enthaltend eine Vielzahl von Sensorknoten (100, 312, 314, 322, 324), die zur Ausführung eines Verfahrens nach einem der vorstehenden Ansprüche ausgebildet sind, wobei jeder Sensorknoten (100) aufweist:
- mindestens einen Sensor (130) zum Erfassen und Erzeugen von Daten über die Umgebung,
- einen Transceiver (120) für drahtlose Kommunikation mit den anderen Sensorknoten,
- ein Steuersignal (110), welches zur Steuerung von drahtloser Kommunikation mit anderen Sensorknoten zur Bildung mindestens einer Zone, umfassend eine Gruppe von Sensorknoten (312, 314, 322, 324), ausgebildet ist, wobei die Gesamtspeicherkapazität der Sensorknoten der Gruppe mindestens einen vordefinierten Mindestwert hat,
- Speichermittel (140) zum Speichern ereignisbezogener Daten und
- eine Energiequelle (150) mit begrenzter Leistung.

27. Sensornetz nach Anspruch 26, wobei das Steuergerät mindestens umfasst
- ein Zusammenarbeitskommunikationsmodul (112), das Anweisungen für den Sensorknoten (100) zur Bildung einer Gruppe mit anderen Sensorknoten in Abhängigkeit von vordefinierten Kriterien bereitstellt,
- ein Aufteilungsmodul (114), das Anweisungen zur Aufteilung des Sensornetzes (200) in Zonen vordefinierter Speicherkapazität und zur Auswahl eines Masterknotens (312, 322) für jede Zone (310, 320) bereitstellt, und
- ein Speicher- und Ereigniskorrelationsmodul (116), das Anweisungen zur Zuordnung ereignisbezogener Daten zu einem zugeordneten Masterknoten (312, 322) und für Speicherknoten bereitstellt, die als Masterknoten ausgewählt werden und Anweisungen für die Speicherorganisation innerhalb der betreffenden Zone (310, 320) bereitstellt.

28. Sensornetz nach Anspruch 26 oder 27, wobei jeder Sensorknoten Speichermittel zum Speichern einer Nachschlagetabelle umfasst, in der für mindestens einen vordefinierten Ereignistyp
- eine Identifizierung des Ereignistyps,
- mindestens eine Bedingung, die zum Erfassen eines Ereignisses des vordefinierten Ereignistyps erfüllt werden muss, und
- eine vordefinierte Speichergröße zum Speichern ereignisbezogener Daten für Ereignisse des definierten Ereignistyps aufgeführt sind.

29. Sensornetz nach Anspruch 28, wobei das Sensornetz dazu ausgebildet ist, für jeden Eintrag der genannten Nachschlagetabelle mindestens eine dem betreffenden Ereignistyp zugeordneten Zone zu bilden, wobei die Zone eine Gruppe von Sensorknoten umfasst und wobei die Gesamtspeicherkapazität der Sensorknoten der Gruppe mindestens die in der Nachschlagetabelle für den betreffenden Ereignistyp definierte Speichergröße hat.

30. Sensornetz nach einem der vorstehenden Ansprüche, welches zur Bereitstellung eines Dateisystems zum Speichern vordefinierter Ereignisse ausgebildet ist,
enthaltend mindestens ein Dateisystem-Schnittstellenmodul zur Bereitstellung eines externen Zugriffs auf die gespeicherten ereignisbezogenen Daten,
wobei das genannte Dateisystem-Schnittstellenmodul zur Verarbeitung von mindestens einem vordefinierten Dateisystembefehl ausgebildet ist.

31. Sensornetz nach Anspruch 30, wobei das Dateisystem-Schnittstellenmodul Anweisungen zur Verarbeitung einer vordefinierten Menge von Dateisystembefehlen beinhaltet.

32. Sensornetz nach Anspruch 30 oder 31, wobei das Steuergerät (110) das genannte Dateisystem-Schnittstellenmodul beinhaltet.

33. Sensornetz nach Anspruch 32, wobei das Steuergerät (110) zur Steuerung einer drahtlosen Kommunikation mit anderen Sensorknoten zur Bildung der genannten mindestens einen Zone unter Ansprechen auf die Verarbeitung von mindestens einem vordefinierten Dateisystembefehl ausgebildet ist.

34. Sensornetz nach einem der Ansprüche 30 bis 33, wobei das Dateisysten-Schnittstellenmodul zum Abrufen und/oder Löschen gespeicherter ereignisbezogener Daten ausgebildet ist.

## Revendications

1. Procédé de stockage de données événementielles d'événements prédéfinis détectés avec un réseau de capteurs sans fil (200) comprenant une pluralité de noeuds de capteurs (100, 312, 314, 322, 324), avec les étapes comprenant
a) fournir au moins un type d'événement en définissant au moins une condition, dans lequel un événement dudit type d'événement est détecté lorsque des données de capteurs générées par au moins un desdits noeuds de capteurs (100, 312, 314, 322, 324) satisfont ladite condition définie,
b) définir une taille de stockage pour stocker des données événementielles pour des événements détectés du type d'événement défini,
c) organiser automatiquement le réseau de capteurs (200) pour former au moins une zone (310, 320) associée au type d'événement défini, ladite zone (310, 320) comprenant un groupe de noeuds de capteurs (312, 314, 322, 324), dans lequel la capacité de stockage totale des noeuds de capteurs dudit groupe a au moins la taille de stockage définie pour stocker les données événementielles.

2. Procédé selon la revendication 1, dans lequel au moins un noeud principal (312, 322) est automatiquement sélectionné parmi le groupe de noeuds de capteurs.

3. Procédé selon la revendication 2, dans lequel pour chaque événement détecté du type d'événement défini, ledit noeud principal (312, 322) reçoit des données événementielles, sélectionne un noeud de capteurs (314, 324) du groupe et transmet les données événementielles reçues au noeud de capteurs sélectionné (314, 324) où elles sont stockées.

4. Procédé selon la revendication 2 ou 3, dans lequel la zone (310, 320) est formée en fonction d'au moins un paramètre de la connexion sans fil entre le noeud principal et au moins un noeud de capteurs du groupe.

5. Procédé selon la revendication 4, dans lequel la zone (310, 320) est formée selon la condition préalable que le noeud principal (312, 322) est capable de communiquer avec chaque noeud de capteurs (314, 324) du groupe avec au moins une force de signal prédéfinie.

6. Procédé selon la revendication 4, dans lequel la zone (310, 320) est formée selon la condition préalable que chaque noeud de capteurs (314, 324) du groupe est accessible par le noeud principal (312, 322) en utilisant une puissance d'émission maximale prédéfinie.

7. Procédé selon l'une quelconque des revendications 2 à 6, dans lequel la zone (310, 320) est formée selon la condition préalable que la distance entre le noeud principal (312, 322) et chaque noeud de capteurs (314, 324) du groupe est inférieure à une valeur prédéfinie.

8. Procédé selon l'une quelconque des revendications précédentes, comprenant en outre l'étape de transmission d'au moins une commande de système de fichiers prédéfinie à partir d'un système informatique distinct à au moins un noeud de capteurs du réseau de capteurs.

9. Procédé selon la revendication 8, dans lequel les étapes a) et b) sont effectuées en transmettant ladite au moins une commande de système de fichiers prédéfinie.

10. Procédé selon la revendication 8 ou 9, dans lequel l'étape c) est automatiquement effectuée en réponse à la transmission de ladite au moins une commande de système de fichiers prédéfinie.

11. Procédé selon l'une quelconque des revendications 8 à 10, dans lequel des données événementielles stockées sont récupérées et/ou supprimées en réponse à la transmission de ladite au moins une commande de système de fichiers prédéfinie.

12. Procédé selon l'une quelconque des revendications précédentes, dans lequel l'organisation automatique du réseau de capteurs (200) pour former au moins une zone (310, 320) comprend que chaque noeud de capteurs (312, 314, 322, 324) du réseau de capteurs sans fil (200)
- émet un signal de balise avec une puissance d'émission prédéfinie, dans lequel ledit signal de balise comprend une identification du noeud de capteurs émetteur respectif,
- détecte ses noeuds de capteurs voisins en recevant des signaux de balise des noeuds de capteurs à portée d'émission,
- génère et transmet une liste de voisinage des noeuds de capteurs voisins détectés, dans lequel ladite liste de voisinage comprend l'identification des noeuds de capteurs voisins détectés dans l'ordre de la force du signal des signaux de balise respectifs reçus,
- reçoit les listes de voisinage de ses noeuds de capteurs voisins et détermine ses proches voisins en identifiant les listes de voisinage dans lesquelles il figure comme première entrée,
- détermine la capacité de stockage totale de ses proches voisins,
- décide de devenir un noeud principal si la capacité de stockage totale de ses proches voisins a au moins une valeur prédéfinie, et si au moins l'un de ses noeuds de capteurs voisins ne figure pas dans une liste de proches voisins reçue d'un autre noeud principal, et que
- chaque noeud de capteurs qui décide de devenir un noeud principal transmet une liste de ses proches voisins sous forme de signal d'annonce pour se présenter lui-même en tant noeud principal, et
- chaque noeud de capteurs qui ne décide pas de devenir un noeud principal transmet un signal d'adhésion à une zone à ce noeud principal duquel il a reçu le signal d'annonce avec la force du signal la plus élevée pour devenir membre d'une zone associée à ce noeud principal.

13. Procédé selon la revendication 12, dans lequel l'étape de transmission d'une liste de ses proches voisins sous forme de signal d'annonce pour se présenter lui-même en tant que noeud principal est effectuée par le noeud de capteurs respectif après un temps d'attente prédéfini.

14. Procédé selon la revendication 13, dans lequel le temps d'attente est défini de façon indépendante pour chaque noeud de capteurs en fonction de son énergie résiduelle et/ou de sa capacité de stockage.

15. Procédé selon l'une quelconque des revendications 12 à 14, dans lequel l'étape d'organisation automatique du réseau de capteurs (200) pour former au moins une zone (310, 320) est répétée à des intervalles prédéfinis.

16. Procédé selon la revendication 15, dans lequel après avoir répété l'étape d'organisation automatique du réseau de capteurs (200), au moins une zone différente (310, 320) est formée et/ou au moins un noeud principal différent (312, 322) est sélectionné.

17. Procédé selon l'une quelconque des revendications 12 à 16, dans lequel tous les noeuds de capteurs du réseau de capteurs ont sensiblement la même capacité de stockage et la capacité de stockage totale desdits proches voisins est déterminée en comptant leur nombre.

18. Procédé selon l'une quelconque des revendications précédentes, dans lequel la capacité de stockage totale des noeuds de capteurs (314, 324) du groupe est inférieure à une taille de stockage maximale prédéfinie.

19. Procédé selon l'une quelconque des revendications précédentes, dans lequel un mode de stockage est défini pour le type d'événement pour organiser le stockage de données événementielles dans la zone correspondante (310, 320).

20. Procédé selon la revendication 19, dans lequel un mode de stockage temporel est défini, dans lequel des données événementielles sont stockées consécutivement dans différents noeuds de capteurs (314, 324) de la zone associée (310, 320), dans lequel, dans chaque noeud de capteurs, des données événementielles sont stockées des événements détectés au cours d'un intervalle de temps prédéfini ou jusqu'à ce que la capacité de stockage maximale du noeud de capteurs respectif (314, 324) soit atteinte.

21. Procédé selon la revendication 20, dans lequel un mode de stockage spatial est défini, dans lequel des données événementielles d'événements détectés aux mêmes emplacements dans le réseau de capteurs (200) sont stockées dans les mêmes noeuds de capteurs (314, 324) de la zone associée (310, 320).

22. Procédé selon l'une quelconque des revendications précédentes, dans lequel sensiblement tous les noeuds de capteurs du réseau de capteurs (200) sont automatiquement organisés en zones, chaque zone comprenant un groupe de noeuds de capteurs avec un noeud principal pour chaque groupe, dans lequel la capacité de stockage totale minimale des noeuds de capteurs de chaque groupe a une valeur minimale prédéfinie.

23. Procédé selon la revendication 22, dans lequel un réseau de communication de base sans fil est établi entre les noeuds principaux (312, 322) des zones pour router les données événementielles vers le noeud principal de la zone associée au type d'événement défini.

24. Procédé selon l'une quelconque des revendications précédentes, dans lequel les données événementielles (510, 520, 530) comprennent au moins l'un des éléments suivants :
- un identifiant pour identifier le type d'événement,
- le temps où l'événement a été détecté,
- l'endroit où l'événement a été détecté, ou
- un identifiant pour identifier une instance d'événement spécifique.

25. Procédé selon l'une quelconque des revendications précédentes, dans lequel des données de capteurs générées par au moins deux noeuds de capteurs différents sensiblement au même moment et/ou dans des zones différentes sont associées au même événement d'un type d'événement défini.

26. Réseau de capteurs (200) pour détecter et stocker des données événementielles d'événements prédéfinis, comprenant une pluralité de noeuds de capteurs (100, 312, 314, 322, 324), adapté pour mettre en oeuvre un procédé selon l'une quelconque des revendications précédentes, dans lequel chaque noeud de capteurs (100) comprend
- au moins un capteur (130) pour détecter et générer des données sur l'environnement,
- un émetteur-récepteur (120) pour la communication sans fil avec d'autres noeuds de capteurs,
- une unité de commande (110) adaptée pour commander la communication sans fil avec d'autres noeuds de capteurs pour former au moins une zone comprenant un groupe de noeuds de capteurs (312, 314, 322, 324), dans lequel la capacité de stockage totale des noeuds de capteurs dudit groupe a au moins une valeur minimale prédéfinie,
- moyens de stockage (140) pour stocker des données événementielles, et
- une source d'alimentation (150) d'une puissance limitée.

27. Réseau de capteurs selon la revendication 26, dans lequel ladite unité de commande comprend au moins
- un module de communication collaborative (112) fournissant des instructions pour le noeud de capteurs (100) pour former un groupe avec d'autres noeuds de capteurs en fonction des critères prédéfinis,
- un module de partitionnement (114) fournissant des instructions pour partitionner le réseau de capteurs (200) en zones d'une capacité de stockage totale prédéfinie et pour sélectionner un noeud principal (312, 322) pour chaque zone (310, 320), et
- un module de corrélation de stockage et d'événements (116) fournissant des instructions pour mapper des données événementielles sur un noeud principal associé (312, 322) et, pour les noeuds de capteurs qui sont sélectionnés en tant que noeuds principaux, des instructions pour l'organisation du stockage dans la zone respective (310, 320).

28. Réseau de capteurs selon la revendication 26 ou 27, dans lequel chaque noeud de capteurs comprend moyens de stockage pour stocker une table de correspondance dans laquelle figurent, pour au moins un type d'événement prédéfini,
- une identification du type d'événement,
- au moins une condition qui doit être satisfaite pour détecter un événement du type d'événement prédéfini, et
- une taille de stockage prédéfinie pour stocker des données événementielles pour des événements du type d'événement prédéfini.

29. Réseau de capteurs selon la revendication 28, dans lequel le réseau de capteurs est adapté pour former automatiquement pour chaque entrée de ladite table de correspondance au moins une zone associée au type d'événement respectif, ladite zone comprenant un groupe de noeuds de capteurs, dans lequel la capacité de stockage totale des noeuds de capteurs dudit groupe a au moins la taille de stockage définie dans la table de correspondance pour le type d'événement respectif.

30. Réseau de capteurs selon l'une quelconque des revendications précédentes, adapté pour fournir un système de fichiers pour stocker des données événementielles d'événements prédéfinis, comprenant au moins un module d'interface de système de fichiers pour fournir un accès externe aux données événementielles stockées, dans lequel ledit module d'interface de système de fichiers est adapté pour traiter au moins une commande de système de fichiers prédéfinie.

31. Réseau de capteurs selon la revendication 30, dans lequel ledit module d'interface de système de fichiers comprend des instructions pour traiter un ensemble prédéfini de commandes de système de fichiers.

32. Réseau de capteurs selon la revendication 30 ou 31, dans lequel l'unité de commande (110) comprend ledit module d'interface de système de fichiers.

33. Réseau de capteurs selon la revendication 32, dans lequel l'unité de commande (110) est adaptée pour commander la communication sans fil avec d'autres noeuds de capteurs pour former ladite au moins une zone en réponse au traitement d'au moins une commande de système de fichiers prédéfinie.

34. Réseau de capteurs selon l'une quelconque des revendications 30 à 33, dans lequel ledit module d'interface de système de fichiers est adapté pour récupérer et/ou supprimer des données événementielles stockées.
